# EUROPEAN PATENT SPECIFICATION

(11) **EP 2 760 652 B1**
(45) Date of publication and mention of the grant of the patent: **14.07.2021**
(21) Application number: 12766088.4
(22) Date of filing: 27.09.2012
(51) Int. Cl.: B27N 1/00, B27N 3/04, B27K 3/36, C08H 8/00, C08L 97/02

(54) **PANELS OF MEDIUM DENSITY FIBREBOARD**
PANELE FÜR EINE MITTELDICHTE FASERPLATTE
PANNEAUX DE FIBRES DE DENSITÉ MOYENNE

(30) Priority: 28.09.2011 EP 11183175
(43) Date of publication of application: 06.08.2014
(73) Proprietor: Titan Wood Limited, London WC2E 7EN (GB)
(72) Inventor: POL, Bernardus, Jozef, Maria, London WC2E 7EN (GB); VAN DOMMELE, Stefan, London WC2E 7EN (GB); KAPPEN, Theorodus, Gerardus, Marinus, Maria, London WC2E 7EN (GB)
(74) Representative: V.O.
(86) International application number: PCT/EP2012/069086
(87) International publication number: WO 2013/045551

(56) References cited:
- EP-A1- 0 680 810
- WO-A1-03/000475
- WO-A1-03/000475
- WO-A1-2011/095824
- JP-A- 6 198 610
- JP-A- 2000 052 320
- US-B1- 6 376 582
- US-B1- 6 632 326
- Medite Europe: "Mowing towards the next generation of panel products at Ecobuild 2010", Pressrelease at Ecobuild 2010 in London GB , 2 March 2010 (2010-03-02), XP002674741, Ecobuild, Earls Court, London GB Retrieved from the Internet: URL:www.tiny.cc/xmr9cw [retrieved on 2012-04-24]
- J. GOMEZ-BUESO ET AL: "Composites made from acetylated lignocellulosic fibers of different origin", HOLZ ALS ROH- UND WERKSTOFF, vol. 58, no. 1-2, 21 June 2000 (2000-06-21), pages 9-14, XP055025445, ISSN: 0018-3768, DOI: 10.1007/s001070050378
- J. Gomez-Bueso ET AL: "Composites made from acetylated lignocellulosic fibers of different origin", Holz als Roh- und Werkstoff, vol. 58, no. 1-2, 21 June 2000 (2000-06-21), pages 9-14, XP055025445, ISSN: 0018-3768, DOI: 10.1007/s001070050378

## Description

### Field of the Invention

The invention is in the field of a type of engineered wood product known as medium density fibreboard (MDF), and specifically pertains to MDF panels having a length and width of at least 1 m, and an aspect ratio of at least 100.

Particularly, the invention pertains to MDF panels possessing a machine direction, as obtainable by commercial-scale continuous processing.

### Background of the invention

MDF (medium density fibre board) refers to a composite product comprising wood fibres pressed and glued together with an adhesive, typically a phenol- formaldehyde or urea-formaldehyde resin, or a polymeric diphenylmethane diisocyanate adhesive. Frequently, MDF panels also comprise a wax. MDF is commonly manufactured as flat sheets or boards of various thicknesses (typically from 3 mm to 25 mm) and densities, and may be supplied with a visually-attractive paper- or wood-veneer or plastics surface finish or surface coating. It is a stiff, very rigid, practically inflexible material. This is normally advantageous, since also relatively thin panels at the low end of the aforementioned thickness range - the most typical thicknesses therein being 6 and 9 mm - are highly suitable for use in applications where rigidity is desired. Thus, the panels find wide end use application for example in furniture, decorative interior wall lining, doors, separation walls, and many other typically indoor applications where it is desired to employ panels of good rigidity.
Wood fibreboards come generally in thicknesses ranging from 2 mm to 60 mm and densities ranging from 600-1000 kg/m³. MDF in a strict sense, which is what the invention preferably pertains to, has a density in the range of from 650 kg/m³ and 800 kg/m³. Above 800 kg/m³ it is normally spoken of high-density fibreboard (HDF). Below 650 kg/m³ it is spoken of light MDF, or ultra light MDF (< 550 kg/m³).

An important characteristic of wood fibreboard, and thus also of MDF, is the size of the wood fibres used. In this respect different classes of product can be distinguished, each having their own particular fields of use. Thus, wood fibreboard is a different product than, e.g., wood particle board. The latter has larger wood particles, generally having a length of 1.5 to 15 mm, a width of 0.15 mm to 1.30 mm, and a thickness of 0.15 to 1.25 mm. The fibres in fibreboard, such as MDF, are considerably smaller, typically having a length of 7 mm or below, preferably of from 1 mm to 5 mm, a width of 0.05 mm to 0.1 mm, and a thickness also of 0.05 mm to 0.1 mm.

The wood fibres in MDF can originate from basically any fibrous lignocellulosic material, with typically used wood being spruce (genus *picea*), various types of pine (genus *pinus*)*,* or eucalyptus (genus: *eucalyptus*). Just as with other engineered wood products, such as particle board or oriented strand board, fibreboard can also be made of modified wood (e.g. steam-treated wood or acetylated wood).

A reference which provides background on particle board, oriented strand board, and fibreboard made on the basis of acetylated wood, is WO 2011/095824. Therein a range of wood elements is discussed for acetylation, the largest being chips (25-75 mm length), the smallest being fibres (1-5 mm length). Tested are particle board and fibre board panels of 500 mm x 500 mm x 12 mm (aspect ratio: 41.7). It is shown that, in contrast with regular MDF or regular particle board, the boards made of acetylated wood are capable of sustaining submersion in water. This is shown with reference to thickness swelling behaviour. JP-A-2000 052320 discloses a panel of medium density fibreboard and the use of acetylated wood fibres in making medium density fibreboard panels.

The background art on fibreboard panels to which the invention relates, viz. relatively large and thin panels, is limited to the conventional knowledge on wood fibreboard.

MDF panels as they are provided for end-use, and made in commercial scale production, can be characterized as being relatively thin. This is identifiable with reference to an aspect ratio of above 100, wherein the aspect ratio is the ratio between the length (L), and the thickness (D of the panel, i.e. L/D. The length L is to be understood as being the largest side dimension of the panel, i.e. it may be equal to the width in the event of a square panel, or larger, in the event of a rectangular panel.

Conventional MDF, when provided in such large and thin panels, comes with several technical problems.

Some of these problems are believed to be related to the panels' linear swelling behaviour. Linear swelling, which is essentially different from the aforementioned thickness swelling that results from submersion in water, refers to the dimensional changes into the direction of the length and the width of the panel, as a result of fluctuations in temperature and relative humidity. Whilst this may not be a problem for small, relatively thick panels, it presents a true challenge in the event of panels as large as having a length and width of at least 1 m, and being as thin as having an aspect ratio of at least 100. Due to the relative thinness, the linear swelling behaviour (expansion and contraction) is substantially pronounced in these panels. Whilst this is a technical issue *per se,* the problems it causes are also more pronounced in the case of large panels, in view of the typical uses of such panels. E.g., to cover a large wall with (aesthetically selected) fibreboard panels will go with a need for seams between the panels in order to accommodate the linear swelling that may occur as a result of subjection to varying degrees of humidity and temperature. These seams need to be relatively large, and are therefore prone to spoiling the desired aesthetic effect, which in many cases is the very reason to employ the panels. It would thus be desired to provide panels that, despite being large and thin, do not require substantial seams in between.

In this respect, it is to be noted that the type of panels referred to, i.e. large and thin panels, as typically produced in continuous, commercial scale processes, have a Machine Direction. The concept of a Machine Direction occurring in fibre-reinforced products is well accepted in the art. This amounts to a degree of orientation imposed on the fibrous material by the direction of producing it. Such a machine direction is recognisable, since the material will inevitably exhibit a degree of "orthogonal inequality". As a result of the presence in the material of a Machine Direction, the panels will be prone to exhibit an unintentional unequal response to otherwise random influences of the environment. With reference to the linear swelling that necessitates to inclusion of seams when large panels are built into a wall surface, the effect of Machine Direction results in further inconvenience. For, the effects of expansion and contraction will differ between the machine direction and the cross direction. Thus, in making the seams, one will either need to take into account a pattern of orientation of the panels so as to secure that any linear swelling effect will be equal along the same border of a row of panels, or one will need to select the width of the seams so as to accommodate the direction into which swelling can be expected to be the largest.

Another drawback related to linear swelling, resides in the requirements for handling the traditional fibreboards in construction work: when large, relatively thin panels are used in construction, it is frequently needed to allow the panels to set, i.e. "acclimatise," at the location where they are to be placed, before they can be further processed. This brings about inconvenience for the constructor, who cannot schedule the work in one go. It would be desired to avoid this, and be able to directly proceed with the construction work.

It will be understood that none of the foregoing drawbacks substantially occurs in small, relatively thick panels, and more particularly in the event that such panels are produced in a process that does not lead to imposing a Machine Direction on the product. For, the effect of linear swelling on a large, thin panel, is not just the expansion or contraction along the length and/or width of the panel as such. Even more importantly, as a result of any nonuniformity in such linear dimensional change of a thin panel (including effects resulting from the presence of a Machine Direction), the panel will be prone to internal movements out of plane. This phenomenon, known as "warping," puts limits to the use of MDF. Whilst warping can be avoided by using smaller size, thick panels (e.g. having an aspect ratio of 50 or lower and having a surface area of 0.25 m² or lower), this will not be acceptable for all usages. In fact, in many fields of use it will be desired to employ large panels of length and width of at least 1 m (i.e. having a surface area of 1 m² or higher), and as thin as 9, or preferably 6 mm (i.e. an aspect ratio as high as 111 or 167, resp.). And particularly in these cases, the MDF panels will frequently be expected to provide an aesthetic view, which means that any substantial risk of warping will not be acceptable.

Another technical issue related to the aesthetic appeal that is frequently expected to achieve from using large MDF panels, is the limited degree of freedom in fixing these panels. Screws, nails, or other fixing means that penetrate the panel, need to be placed well off the edge. A typical distance is 25 mm in both directions from the corner and 12 mm from the edge. It is therefore desired to provide a fibreboard which allows a greater freedom of positioning such fixing means.

### Summary of the Invention

The invention is defined by a panel of medium density fibreboard according to claim 1, and the use of acetylated wood fibres in making medium density fibreboard panels, according to claim 12. In order to better address one or more of the foregoing desires, the disclosure presents, in one aspect, a panel of medium density fibreboard having a length and width of at least 1 m, and an aspect ratio of at least 100, comprising wood fibres having a length of 7 mm or below, pressed together with an adhesive, wherein the wood fibres are made of acetylated wood.

In another aspect, the disclosure provides a panel of medium density fibreboard obtainable by a process comprising the steps of providing wood fibres, adding adhesive and, preferably, wax to the fibres; casting the fibres onto a surface, so as to form a mat; cold pre-pressing, and hot pressing, wherein the surface on which the fibres are cast, is a moving belt, and wherein the fibres comprise acetylated wood.

In yet another aspect, the disclosure provides the use of acetylated wood fibres in making medium density fibreboard panels, the panels having a length and width of at least 1 m, and an aspect ratio of at least 100.

In a further aspect, the disclosure resides in the use of acetylated wood fibres in making medium density fibreboard panels, the panels having a length and width of at least 1 m, and an aspect ratio of at least 100, for the purpose of reducing warping of the panel as compared to a similar panel made of non-acetylated wood fibres.

In a still further aspect, the disclosure resides in the use of acetylated wood fibres in making medium density fibreboard panels, the panels having a length and width of at least 1 m, and an aspect ratio of at least 100, for the purpose of enabling the penetration of fixation means at a distance selected from the group consisting of less than 25 mm in both directions from a corner of the panel, less than 12 mm from an edge of the panel, and combinations thereof.

### Brief description of the drawings

Figure 1 shows the swell (%) in the X and Y directions of the acetylated (TRI) and non-acetylated (NA) MDF boards having a thickness 25 mm, as a function of time (days).
Figure 2 shows the elongation d (mm) of parameters d1-d6 measured in three runs during the warping test of four MDF panels (TRI - acetylated, NA - non-acetylated) of 6 mm and 15 mm thickness.

### Detailed description of the Invention

The invention, in a broad sense, is based on the unexpected finding that employing acetylated wood fibres in fibreboard panels of the large and thin type, is capable of reducing or even avoiding typical problems that are normally incurred with traditional MDF, if provided in such large and thin panels.

Hitherto, the art on conventional MDF did not provide acceptable solutions for these longstanding problems. The state of the art on large and thin panels is limited to conventional MDF. The state of the art in respect of acetylated wood is limited to small and thick panels, and does not provide any reason for expectations relating to the pronounced problems in large and thin panels.

The invention expressly relates to panels that are relatively large and thin. The panels of the invention have a length and width of at least 1 m, preferably at least 1.2 m, with most preferred dimensions being 1.22 m x 1.22 m, or with either of the two dimensions being 2.44 m. As to thickness, this refers to the low end of the fibreboard product spectrum, and particularly to panels having a thickness of below 10 mm. A preferred thicknesses in this respect is 9 mm, and more preferably 6 mm. It will be understood that, the larger the panel, the greater the thickness can be, whilst still considered thin. The aspect ratio preferably is preferably higher than 122, more preferably higher than 200. Panels of a length of 2.44 m or higher, can have still higher aspect ratio's, e.g., 2440/9 (271) or even 2440/6 (407).

The invention particularly relates to large and thin panels possessing a Machine Direction. The term "Machine Direction" is to be understood as referring to the phenomenon that, as a result of continuous processing of a moving fibre bed, the fibres will assume a degree of orientation.

The concept of a Machine Direction does not imply a man-imposed orientation of fibres (as would be the case in, e.g., oriented strand board or unidirectionally reinforced composites). Rather, the concept of a Machine Direction refers to a degree of orientation that in itself is accidental, but that is the inevitable result of the motion of a bed of fibres into one direction.

This can be viewed as meaning that the fibres, although not strictly oriented, viewed over their population in the board are present a preferred orientation. Thus, a plurality of the fibres will be oriented to a greater extent into the direction of motion during production. Or, put otherwise, a minority of the fibres will be oriented to a greater extent into the cross-direction, i.e. in the same plane orthogonally to said direction of motion. It will be understood that the orientation of a fibre, also in the case of the small fibres used in fibreboard, is viewed with reference to their length.

The fibre orientation in the present invention is tested by the following method by microscopic analysis. In particular, optical microscopy is used to build a pixel digital image with area of 11.3×11.4 mm² of the surface of each sample. As a measure for the presence of fibre orientation the so-called texture aspect ratio according to ISO 25178 / EUR 15178N is calculated from these 11.3×11.4 mm² images. This calculation yields a value on anisotropy scale between 0 and 1, wherein 0 means fully oriented and 1 no orientation (fully random). In one embodiment of the invention, the degree of fibre orientation in the fibre board of the invention is less than 1, preferably less than 0.95, more preferably in the range 0.6-0.9. The interpretation of the degree of fibre orientation may depend on the length of the fibres. For small fibres having a length under 7 mm, a value of 0.95 may already evidence that a significant non-random orientation is present in the fiber board, which corresponds to the Machine Direction.

Without necessarily analysing the direction of orientation of the fibres, a Machine Direction can also be viewed with reference to certain properties being unequal when measured in the panel along the x axis and the y axis (i.e. the length and width; in other words, the directions perpendicular to the thickness). Properties by measurement of which a Machine Direction can be assessed, are particularly mechanical properties such as tensile modulus, tensile strength, bending modulus, bending strength, compression modulus, or compression strength. These properties are well-known to the skilled person, and art-recognised methods exist to measure them.

Moreover, for establishing the presence of a Machine Direction, it is not important how these mechanical properties are measured, as long as the length and the width of the panel are measured in equal fashion, under the same conditions, and over a sides of equal length (which is a given thing for a square panel). In the event of a rectangular panel it is normally likely that the width represents the production direction, and the length represents the width of the production equipment. It will be understood that the presence of a Machine Direction in a rectangular panel, by measuring a mechanical property over two sides, will be best done if first a part of the longer side of the panel is cut off, so as to avoid any influence of length differences on the measurement of mechanical properties.

It should be noted that it is generally irrelevant to establish which of the directions measured actually represents the production direction and which was, originally the cross-direction. What matters is the fact that a measurable difference is established between the two sides of a square panel. The difference should be measurable and, if a Machine Direction is present, will generally be of the order of 0.5 to 5%.

Small scale panels, produced by batch wise providing the constituents (wood fibres coated with adhesive), will not normally possess a Machine Direction. Large, commercial scale panels produced in a continuous process will typically possess a Machine Direction.

A process of making the panels of the invention will generally be the same as conventionally used in making traditional MDF.

The composition will generally be, in percentages by weight, 75-90% wood, 4-15% adhesive (glue), 0.5-2.5% additives, and 4-10% water.

A great variety of wood-types can be employed for making the acetylated wood fibres. These are not different from the types of wood generally known in the art as possible starting materials for conventional MDF. Preferred types of wood originate from trees in the genera of *pinus, picea,* or *eucalyptus.* Other wood types include aspen, poplar, beech, Japanese sugi (cedar), or hemlock. Most preferably the wood is spruce or radiata pine. It is conceivable to use combinations of wood types as well, such as, e.g., a mixture of acacia and eucalyptus.

The adhesive too can generally be selected from the same types of adhesives as are used in making conventional MDF. Preferred adhesives are selected from the group consisting of phenol-formaldehyde resin, melamine urea-formaldehyde resin, or isocyanate based adhesives among which methylene diphenyl diisocyanate (MDI) and polymeric methylene diphenyl diisocyanate (PMDI).

Additives are optional. They are used in small amounts, and for different purposes. The most widely used additive is wax, preferably paraffin, which is added either as a wax melt or in the form of an aqueous emulsion. Paraffin, or other waxes, are mainly added to improve the swelling properties of the MDF. Other additives include colorants (e.g. to indicate different grades of MDF, or so as to fully colour the panel for decorative purposes). Other optional additives, depending e.g. on the geographical area and intended use, include fungicides or insecticides.

The panels of the disclosure can be generally made in a process comprising the following steps:
- providing solid wood;
- cutting the solid wood into wood chips (generally having a size of length and width 15 mm to 75 mm, and a thickness of 1.5 to 15 mm);
- optionally, but preferably, purifying the chips by removing small contaminants, such as originating from stones or sand, and metals;
- pre-steaming the chips (this involves a hydrothermal pre-treatment, by heating at 100°C under atmospheric pressure;
- refining: transforming the pre-treated wood chips to wood fibres;
- subjecting the wood, in at least one of the process stages from solid wood to wood fibres, to acetylation;
- adding adhesive and, preferably, wax;
- drying;
- casting the fibres onto a surface, so as to form a mat;
- cold pre-pressing;
- hot pressing;
- finishing and cutting to size;
- sanding.

In commercial, continuous processing, the surface on which the fibres are cast will generally be a moving belt, with also the further steps, including the pressing being conducted via a moving belt, e.g. via a double belt press or a calendar. It is conceivable, though, that the mat is provided on a continuously moving belt, and the pressing is conducted in a multidaylight press. In any event, the continuous process of making a fibrous mat will generally impose a Machine Direction on the eventual panel.

In connection herewith, the disclosure also pertains to the particular type of MDF panel as can be identified with reference to its being obtainable by such a process. Thus, the invention provides a panel of medium density fibreboard obtainable by a process comprising the steps of providing wood fibres, adding adhesive and, preferably, wax to the fibres; casting the fibres onto a surface, so as to form a mat; cold pre-pressing, and hot pressing, wherein the surface on which the fibres are cast, is a moving belt, and wherein the fibres comprise acetylated wood. Preferably, such a panel is obtainable by a process as described above wherein the pressing is conducted via a moving belt, e.g. via a double belt press or a calendar.

The MDF panels of acetylated wood fibres of the invention can be made in accordance with, e.g., the following general processes:
(a) acetylating solid wood; chipping and refining the acetylated wood so as to form acetylated wood fibres; rendering the fibres into an MDF panel as described above;
(b) chipping solid wood; acetylating the chips; refining the acetylated wood so as to form acetylated wood fibres; rendering the fibres into an MDF panel as described above;
(c) chipping solid wood, refining so as to form wood fibres; acetylating the wood fibres; rendering the fibres into an MDF panel as described above.

Surprisingly, method (a) is suitable to provide MDF having a sufficient degree of acetylation in the fibres so as to address the desires in the art. This is essentially different from the background art on composite wood products comprising acetylated wood. Therein, it is customary to first render the wood into the desired size, and then subject it to acetylation. These processes, particularly in the event of acetylating fibres, are technically complicated, particularly in view of handling problems of the fibres in the acetylation process. The present inventors have now found that fibres made from acetylating solid wood, surprisingly possess the desired properties.

In connection herewith, the invention also pertains to a panel of medium density fibreboard (MDF), comprising wood fibres the largest dimension of which is 5 mm or below, pressed together with an adhesive, the panel having an aspect ratio of at least 100 and a surface area of at least 1 m², wherein the wood fibres are made of acetylated wood, obtainable by a process comprising the steps of (i) providing dried solid wood; (ii) subjecting the solid wood to acetylation by contact with acetic anhydride; (iii) chipping the acetylated wood and subjecting the chips to a size reduction so as to obtain fibres the largest dimension of which is 5 mm or below.

The acetylation can be conducted in any manner known in the field. Reference is made, *inter alia,* to WO2011/09852, GB 2 456 915, US 5,821,359, US 6,632,326, EP 1 718 442; EP 0 680 810.

The MDF panels according to the invention are judiciously provided with a view to reducing or avoiding the effects of linear swelling that normally affect MDF panels of the large and thin type. Particularly, this refers to reduced warping of a panel of the invention as compared to a similar panel made of non-acetylated wood fibres. The reduced warping can be assessed by a challenge test. Accordingly, the reduced warping, being defined as the deviation of the geometry of a panel from an initial state of flatness, can be assessed by a challenge test analogous to NEN-EN 1121. Herein one determines the shape stability of a large panel to expansion and warping when installed between two sets of climate conditions. In this test, the panel is climatised before testing at 65% relative humidity and a temperature of 20°C. The panel is then positioned in a frame of sufficient stiffness and installed between two sets of climatic conditions for a certain period. Climate 1 consists of a temperature of 23°C and a relative humidity of 30%, and climate 2 consists of a temperature of 3°C and a relative humidity of 85%. During exposure to both sets of climatic conditions, the distortion of the panel is measured. Optionally radiation with additional Infrared lamps can be conducted to simulate the influence of direct sunlight (as in NEN-EN-1121).

As demonstrated in the examples, the MDF panels according to the invention show a much higher dimensional stability than comparable non-acetylated MDF panels. In addition, the low elongation in the panels is also practically equal in both X and Y directions in the acetylated panels, while non-acetylated panels show different relative elongation in the X direction than the Y direction. This is surprising since both acetylated and non-acetylated panels possess a Machine Direction, which is considered to cause anisotropic behaviour in physical properties of industrially produced panels. Hence, despite the presence of the Machine Direction, the acetylated MDF panels of the present invention are equally dimensionally stable in both X and Y directions. This aspect is particularly important in large and thin panels with a high aspect ratio such as those of the invention.

Moreover, the examples also show that the acetylated panels according to the invention show low distortions on wetting (warping) and the warping stays low even if a twice thinner board of the same dimensions is used. Conventional, non-acetylated boards of these dimensions show considerable warping already at a thickness of 15 mm, which becomes much worse when thinner boards of 6 mm are used.

In connection herewith, the disclosure also relates to the use of acetylated wood fibres in making medium density fibreboard panels, the panels having a length and width of at least 1 m, and an aspect ratio of at least 100, for the purpose of reducing warping of the panel as compared to a similar panel made of non-acetylated wood fibres.

Surprisingly, the MDF panels according to the invention allow a greater degree of freedom in using fixation means such as screws, nails, or plugs, that penetrate the panel. The greater degree of freedom is exhibited when such fixation means are provided closer to the edge than is recommendable for conventional MDF.

In connection herewith, the disclosure further pertains to the use of acetylated wood fibres in making medium density fibreboard panels, the panels having a length and width of at least 1 m, and an aspect ratio of at least 100, for the purpose of enabling the penetration of fixation means at a distance selected from the group consisting of less than 25 mm in both directions from a corner of the panel, less than 12 mm from an edge of the panel, and combinations thereof

The following can be done to test a panel's fixation ability. The large panels to be tested on fixation are conditioned at 20°C with a relative humidity of 65%. Such large panel is then rigidly mounted on an inflexible frame of dimensions 122cm x 244cm with fixation means at less than 25 mm in both directions from the four corners of the panel, or less than 12 mm from the four edges of the panel. The structural integrity of the board area surrounding the fixing means is analysed, by visual inspection, after multiple cycling between 3°C with a relative humidity of 30% and 40°C with a relative humidity of 60%. Optionally, the test set-up can be irradiated with an additional IR lamp to simulate the influence of direct sun lighting.

The invention is now illustrated in the following, non-limiting examples.

### Example 1 Machine Direction

Three acetylated boards with dimensions 2440x1220x15 mm³ were prepared in a continuous process according to industrial MDF processing. This industrial MDF processing includes continuous mat formation of acetylated wood fibers onto a moving belt, after which continuous pressing is accomplished. The formed fiber mat is passed through a continuous belt press to pre-press the mat to reduced thickness; after this pre-pressing the mat is continuously forwarded into the continuous main press in between two moving steel belts, which pass through the continuous press at high temperature and high pressure. At the end of this continuous pressing the produced MDF panels are sawn to desired length.

The boards were analyzed for fibre orientation by microscopic analysis. Optical microscopy was used to build a pixel digital image with area of 11.3×11.4 mm² of the surface of each sample. As a measure for the presence of fibre orientation the so-called texture aspect ratio according to ISO 25178 / EUR 15178N was calculated from these 11.3×11.4 mm² images. This calculation yields a value on anisotropy scale between 0 and 1, wherein 0 means fully oriented and 1 no orientation (fully random). The boards scored 0.85, 0.84 and 0.89, which is on average 0.86.

A comparable board produced manually, batch-wise, corresponds to a value of 1 due to the absence of the aforementioned machine direction in the process.

### Example 2 Dimension stability

Both acetylated and non-acetylated panels were prepared in the continuous process as described in Example 1, with the difference that in non-acetylated boards non-acetylated fibers were used.

Out of the acetylated and non-acetylated MDF panels with dimensions 2440x1220x12 mm³ (length x width x height) samples with dimensions of 1000x25x12 mm³ are cut in length as well as in width direction of the panel (at least 100 mm away from the perimeter of the panel).

Samples are acclimatized according to EN 318, until all panel samples have reached Equilibrium Moisture Content (EMC) at 65% Relative Humidity, 20°C). Samples were measured in the length direction of the sample and then emerged for 14 days in water at 20°C and measured again; then the samples were acclimatized at 65% Relative Humidity, 20°C again for a period of 37 days (51 days total "emersion+drying time"). The samples were measured again.

The procedure resulted in the following data. All data are calculated from the EMC condition before the start of the emersion test.

| | 14 days emersion (in water 20°C) |
|---|---|
| SAMPLE | swell % |
| Acetylated board (X direction) | 0.1221 |
| Acetylated board (Y direction) | 0.1200 |
| Non-acetylated board (X direction) | 0.3957 |
| Non-acetylated board (Y direction) | 0.4120 |

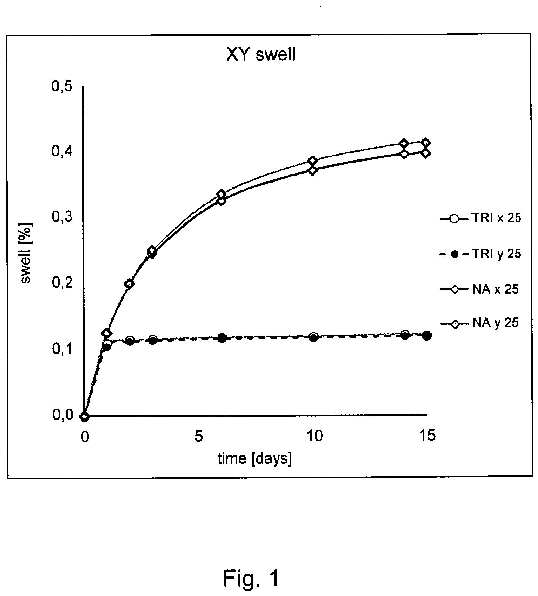

The result is shown in Figure 1. As can be seen from this figure, the non-acetylated (NA) boards show a considerably higher swelling in both X and Y directions than the acetylated boards (TRI). In addition, the elongation in the non-acetylated boards is unequal, that is there is a significantly higher elongation in the Y direction than in the X direction (anisotropic behaviour). The acetylated fibre boards show a much lower swelling elongation and, in addition, an equal elongation in both directions (isotropic behaviour).

### Example 3 Warping

A total of four fibreboards, being acetylated (TRI) and non-acetylated (NA) fibreboards in two thicknesses (15 and 6 mm), were tested on warping. The fibreboards were produced in the continuous process as described in Example 1. The dimensions of the boards are 2440x1220xZ mm³, where Z denotes the thickness of the board as mentioned above.

The distortion of the board in six directions was measured to yield parameters d1-d6. Parameters d1, d2, d3, d4 correspond to the sides of the board in the perimeter order and d5 and d6 to the diagonals of the board. These were measured by means of an elastic cord fixed at the corners but being free either expand or contract. The measure of the curvature of the board was determined by measuring the distance of the cord (at the center) to the board with a marking gauge. Every subsequent measurement was performed at the same position.

During the test, a board was hung vertically (portrait orientation) using a cord and was sprayed with water with a rate about 0.1 litre per minute on one side during 90 minutes, with a total of 9000 ml. After it was left to dry for at least 24 hours at 20 °C until the mass of the board was equal to the initial mass before testing. The parameters d1-d6 were measured in the dried board. The board was then re-wetted and re-dried according to the same procedure and the parameters were measured again. After another re-wetting cycle, the parameters were measured for the third time.

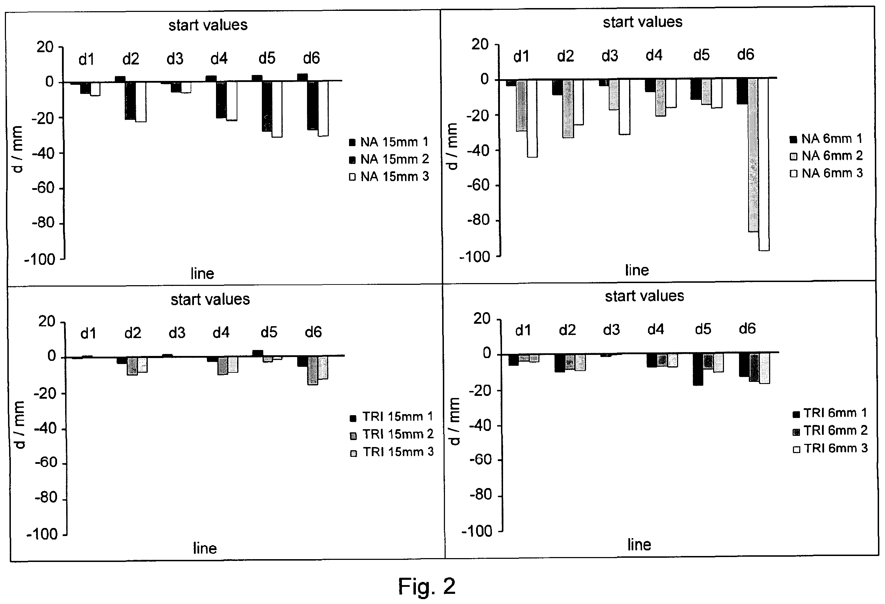

The results are shown in Figure 2. As can be seen from the figure, the non-acetylated board of 15 mm (NA 15 mm) shows high warping, in some dimensions up to about 30 mm. The warping is worse if a thinner board of 6 mm is used (NA 6 mm), wherein the distortion can be as high as 80 mm and even higher. The acetylated board TRI 15 mm shows low warping (within 20 mm in all directions), which warping is also low for the thinner board TRI 6 mm.

## Claims

1. A panel of medium density fibreboard MDF, comprising wood fibres the largest dimension of which is 7 mm or below, pressed together with an adhesive, the panel having an aspect ratio of at least 100 and a surface area of at least 1 m², wherein the wood fibres are made of acetylated wood; wherein the aspect ratio is the ratio L/D between the length L and the thickness D of the panel.

2. A panel according to claim 1, possessing a Machine Direction, wherein the Machine Direction is a degree of orientation imposed on the fibrous material by the direction of producing it.

3. A panel according to claim 1 or 2, wherein the aspect ratio is higher than 122, preferably higher than 200.

4. A panel according to any one of the preceding claims, wherein the fibres have length of from 1 to 5 mm.

5. A panel according to any one of the preceding claims, wherein the fibres made of acetylated wood are obtainable by a process comprising the steps of (a) providing dried solid wood; (b) subjecting the solid wood to acetylation by contact with acetic anhydride; (c) chipping the acetylated wood and subjecting the chips to a size reduction so as to obtain fibres the largest dimension of which is 5 mm or below.

6. A panel according to any one of the preceding claims, wherein the adhesive is selected from the group consisting of selected from the group consisting of phenol-formaldehyde resin, melamine urea-formaldehyde resin, methylene diphenyl diisocyanate MDI and polymeric methylene diphenyl diisocyanate PMDI.

7. A panel according to any one of the preceding claims, wherein the wood originates from trees in the genera of *pinus, eucalyptus,* or *picea,* preferably spruce or radiata pine.

8. A panel according to any one of the preceding claims, wherein the fibres made of acetylated wood are obtained by a process comprising the steps of (a) chipping solid wood; (b) acetylating the chips; and (c) refining the acetylated wood chips so as to form acetylated wood fibres.

9. A panel of medium density fibreboard according to claim 1 obtainable by a process comprising the steps of providing wood fibres, adding adhesive and, preferably, wax to the fibres; casting the fibres onto a surface, so as to form a mat; cold pre-pressing, and hot pressing, wherein the surface on which the fibres are cast, is a moving belt, and wherein the fibres comprise acetylated wood.

10. A panel according to claim 9, wherein the pressing is conducted via a moving belt, e.g. via a double belt press or a calendar.

11. A panel according to any one of the claims 1 to 8, obtainable by a process as defined in claim 9 or 10.

12. The use of acetylated wood fibres in making medium density fibreboard panels, the panels having an aspect ratio of at least 100 and **characterised by** a surface area of at least 1m²; wherein the aspect ratio is the ratio L/D between the length L and the thickness D of the panel.

13. The use according to claim 12 of acetylated wood fibres in making medium density fibreboard panels, the panels having a length and width of at least 1 m, , for the purpose of reducing warping of the panel as compared to a similar panel made of non-acetylated wood fibres.

14. The use according to claim 12 of acetylated wood fibres in making medium density fibreboard panels, the panels having a length and width of at least 1 m, , for the purpose of enabling the penetration of fixation means at a distance selected from the group consisting of less than 25 mm in both directions from a corner of the panel, less than 12 mm from an edge of the panel, and combinations thereof.

## Patentansprüche

1. Element aus mittel dichter Faserplatte MDF, umfassend Holzfasern, deren größte Abmessung 7 mm oder darunter ist, zusammengepresst mit einem Klebstoff, das Element mit einem Seitenverhältnis von wenigstens 100 und einer Oberfläche von wenigstens 1 m², wobei die Holzfasern aus acetyliertem Holz hergestellt sind; wobei das Seitenverhältnis das Verhältnis L/D zwischen der Länge L und der Dicke D des Elements ist.

2. Element nach Anspruch 1, besitzend eine Maschinenrichtung, wobei die Maschinenrichtung ein Orientierungsgrad ist, auf dem Fasermaterial auferlegt durch die Richtung seiner Herstellung.

3. Element nach Anspruch 1 oder 2, wobei das Seitenverhältnis höher als 122, vorzugsweise höher als 200 ist.

4. Element nach einem der vorhergehenden Ansprüche, wobei die Fasern eine Länge von von 1 bis 5 mm haben.

5. Element nach einem der vorhergehenden Ansprüche, wobei die Fasern, hergestellt aus acetyliertem Holz, durch ein Verfahren erhältlich sind, umfassend die Schritte von (a) Bereitstellen von getrocknetem Massivholz; (b) Unterziehen des Massivholzes einer Acetylierung durch Kontakt mit Essigsäureanhydrid; (c) Zerkleinern des acetylierten Holzes und Unterziehen der Späne einer Zerkleinerung, um Fasern zu erhalten, deren größte Abmessung 5 mm oder darunter ist.

6. Element nach einem der vorhergehenden Ansprüche, wobei der Klebstoff ausgewählt ist aus der Gruppe bestehend aus Phenol-Formaldehyd-Harz, Melamin-Harnstoff-Formaldehyd-Harz, Methylendiphenyl-Diisocyanat MDI und polymerem Methylendiphenyl-Diisocyanat PMDI.

7. Element nach einem der vorhergehenden Ansprüche, wobei das Holz von Bäumen aus den Gattungen von *Pinus, Eucalyptus,* oder *Picea,* vorzugsweise Fichte oder Radiata-Kiefer, stammt.

8. Element nach einem der vorhergehenden Ansprüche, wobei die Fasern, hergestellt aus acetyliertem Holz, durch ein Verfahren erhalten werden, umfassend die Schritte von: (a) Zerkleinern von Massivholz; (b) Acetylieren der Späne; und (c) Veredeln der acetylierten Holzspäne, um acetylierte Holzfasern zu bilden.

9. Element aus mitteldichter Faserplatte nach Anspruch 1, erhältlich durch ein Verfahren, umfassend die Schritte von Bereitstellen von Holzfasern, Hinzufügen von Klebstoff und, vorzugsweise, Wachs zu den Fasern; Gießen der Fasern auf eine Oberfläche, um eine Matte zu bilden, kaltem Vorpressen, und heißem Pressen, wobei die Oberfläche, auf die die Fasern gegossen werden, ein sich bewegendes Band ist, und wobei die Fasern acetyliertes Holz umfassen.

10. Element nach Anspruch 9, wobei das Pressen über ein sich bewegendes Band, z. B. über eine Doppelbandpresse oder einen Kalander, erfolgt.

11. Element nach einem der Ansprüche 1 bis 8, erhältlich durch ein Verfahren wie in Anspruch 9 oder 10 definiert.

12. Verwendung von acetylierten Holzfasern zum Herstellen von mitteldichten Faserplatte-Elementen, die Elemente mit einem Seitenverhältnis von wenigstens 100 und **gekennzeichnet durch** eine Oberfläche von wenigstens 1 m²; wobei das Seitenverhältnis das Verhältnis L/D zwischen der Länge L und der Dicke D des Elements ist.

13. Verwendung nach Anspruch 12 von acetylierten Holzfasern zum Herstellen von mitteldichten Faserplatte-Elementen, die Elemente mit einer Länge und Breite von wenigstens 1 m, um das Verziehen des Elements im Vergleich zu einem ähnlichen Element, hergestellt aus nicht-acetylierten Holzfasern, zu reduzieren.

14. Verwendung nach Anspruch 12 von acetylierten Holzfasern zum Herstellen von mitteldichten Faserplatte-Elementen, die Elemente mit einer Länge und Breite von wenigstens 1 m, um das Eindringen von Befestigungsmitteln in einem Abstand zu ermöglichen, ausgewählt aus der Gruppe, bestehend aus weniger als 25 mm in beiden Richtungen von einer Ecke des Elements, weniger als 12 mm von einer Kante des Elements, und Kombinationen davon.

## Revendications

1. Panneau de fibres moyenne densité MDF, comprenant des fibres de bois dont la plus grande dimension est 7 mm ou moins, pressées ensemble avec un adhésif, le panneau présentant un rapport d'aspect d'au moins 100 et une surface d'au moins 1 m², dans lequel les fibres de bois sont composées de bois acétylé ; dans lequel le rapport d'aspect est le rapport L/D entre la longueur L et l'épaisseur D du panneau.

2. Panneau selon la revendication 1, possédant un sens machine, dans lequel le sens machine est un degré d'orientation imposé sur le matériau fibreux par le sens de production de celui-ci.

3. Panneau selon la revendication 1 ou 2, dans lequel le rapport d'aspect est supérieur à 122, de préférence supérieur à 200.

4. Panneau selon l'une quelconque des revendications précédentes, dans lequel les fibres présentent une longueur de 1 à 5 mm.

5. Panneau selon l'une quelconque des revendications précédentes, dans lequel les fibres composées de bois acétylé peuvent être obtenues par un procédé comprenant les étapes de (a) fourniture de bois solide séché ; (b) soumission du bois solide à une acétylation par contact avec de l'anhydride acétique ; (c) déchiquetage du bois acétylé et soumission des copeaux à une réduction de taille de manière à obtenir des fibres dont la plus grande dimension est 5 mm ou moins.

6. Panneau selon l'une quelconque des revendications précédentes, dans lequel l'adhésif est sélectionné dans le groupe consistant en résine phénol-formaldéhyde, résine mélamine-urée-formaldéhyde, diisocyanate de diphénylméthylène MDI et diisocyanate de diphénylméthylène polymère PMDI.

7. Panneau selon l'une quelconque des revendications précédentes, dans lequel le bois provient d'arbres dans le genre de *pinus, eucalyptus,* ou *picea,* de préférence épicéa ou pin radiata.

8. Panneau selon l'une quelconque des revendications précédentes, dans lequel les fibres composées de bois acétylé sont obtenues par un procédé comprenant les étapes de (a) déchiquetage de bois solide ; (b) acétylation des copeaux ; et (c) raffinage des copeaux de bois acétylé de manière à former des fibres de bois acétylé.

9. Panneau de fibres moyenne densité selon la revendication 1 pouvant être obtenu par un procédé comprenant les étapes de la fourniture de fibres de bois, l'ajout d'adhésif et, de préférence, de cire aux fibres ; la coulée des fibres sur une surface, de manière à former un mat ; le pré-pressage à froid, et le pressage à chaud, dans lequel la surface sur laquelle les fibres sont coulées, est une courroie mobile, et dans lequel les fibres comprennent du bois acétylé.

10. Panneau selon la revendication 9, dans lequel le pressage est effectué par le biais d'une courroie mobile, par exemple par le biais d'une presse à double courroie ou d'une calandre.

11. Panneau selon l'une quelconque des revendications 1 à 8, pouvant être obtenu par un procédé tel que défini dans la revendication 9 ou 10.

12. Utilisation de fibres de bois acétylé lors de la fabrication de panneaux de fibres moyenne densité, les panneaux présentant un rapport d'aspect d'au moins 100 et **caractérisée par** une surface d'au moins 1 m² ; dans laquelle le rapport d'aspect est le rapport L/D entre la longueur L et l'épaisseur D du panneau.

13. Utilisation selon la revendication 12 de fibres de bois acétylé lors de la fabrication de panneaux de fibres moyenne densité, les panneaux présentant une longueur et largeur d'au moins 1 m, aux fins de réduction de gauchissement du panneau en comparaison d'un panneau similaire composé de fibres de bois non acétylé.

14. Utilisation selon la revendication 12 de fibres de bois acétylé lors de la fabrication de panneaux de fibres moyenne densité, les panneaux présentant une longueur et largeur d'au moins 1 m, aux fins de permission de la pénétration de moyens de fixation à une distance sélectionnée dans le groupe consistant en moins de 25 mm dans les deux directions à partir d'un coin du panneau, moins de 12 mm à partir d'un bord du panneau, et des combinaisons de ceux-ci.
